# EUROPÄISCHE PATENTSCHRIFT

(11) **EP 1 909 557 B1**
(45) Veröffentlichungstag und Bekanntmachung des Hinweises auf die Patenterteilung: **17.12.2008**
(21) Anmeldenummer: 06762967.5
(22) Anmeldetag: 03.08.2006
(51) Int. Cl.: A01G 9/02, B65D 1/46

(54) **KUNSTSTOFFBEHÄLTER**
PLASTIC CONTAINER
CONTENANT EN PLASTIQUE

(30) Priorität: 05.08.2005 DE 202005012314 U
(43) Veröffentlichungstag der Anmeldung: 16.04.2008
(73) Patentinhaber: Pöppelmann Holding GmbH & Co. KG., 49393 Lohne (DE)
(72) Erfinder: SCHMIDT, Guido, 49413 Dinklage (DE)
(74) Vertreter: Bünemann, Egon
(86) Internationale Anmeldenummer: PCT/EP2006/007695
(87) Internationale Veröffentlichungsnummer: WO 2007/017183

(56) Entgegenhaltungen:
- CH-A- 369 401
- FR-A- 2 295 883
- US-A- 6 134 832

## Beschreibung

Die Erfindung betrifft einen Kunststoffbehälter nach dem Oberbegriff des Anspruchs 1. Kunststoffbehälter dieser Art sind insbesondere als Pflanztöpfe im Erwerbsgartenbau und als Blumentöpfe im Hausgebrauch verbreitet. Ein solcher Kunststoffbehälter ist aus der Druckschrift US-A-6 134 832 bekannt. Für die Stabilität in Höhe eines solchen Kunststoffbehälters etwa beim Abstapeln, beim Vereinzeln, Befüllen oder Versetzen durch Maschinen oder von Hand und bei der Aufstellung kommt dem Rand eine besondere Bedeutung zu, da der Kunststoffbehälter vorwiegend in diesem Bereich erfaßt wird. So werden Pflanztöpfe im Erwerbsgartenbau von Handhabungsmaschinen vorzugsweise an einander gegenüberliegenden Bereichen des Randes untergriffen und auch bei der Aufnahme von Hand am Rand erfaßt. Eine besondere Belastung nehmen Blumenampeln am Rand auf, wenn diese beispielsweise an drei Punkten des Umfangs mit einem Hängegeschirr verbunden werden, das den Rand hintergreift.

Trotz dieser Anforderung und trotz der hier auftretenden Belastungen geht die allgemeine Entwicklung bei Kunststoffbehältern zu dünneren Wandstärken und hohen Materialfestigkeiten, verbunden allerdings mit einer belastungsgerechten Formgebung. Dies hat dazu geführt, daß der obere Abschlußbereich der Kunststoffbehälter häufig in Form eines unterseitig offenen umlaufenden Rinnenprofils im Anschluß an einen oberen Bereich der Behälterwand ausgebildet und das Rillenprofil mit querschnittsversteifenden Stegen versehen ist. Die dabei entstehende räumliche Struktur liefert gute Festigkeitseigenschaften. Diese Festigkeit ist allerdings mit einer nur geringen Strukturelastizität verbunden. Wenn solche Kunststoffbehälter einzeln oder im Stapel erheblichen Verformungen ausgesetzt werden, beispielsweise durch seitliches Zusammendrücken beim Transport, durch Querverformungen bei der maschinellen Handhabung oder durch Druck oder Stoß von der Seite auf eine Blumenampel, reicht die konstruktionsbedingte Nachgiebigkeit nicht aus, diese Verformungen elastisch abzufangen. Es kommt dann leicht zum Bruch.

Aufgabe der Erfindung ist es dementsprechend, einen Kunststoffbehälter unter Weiterführung des hohen Entwicklungsstandes in Bezug auf den oberen Abschlußbereich mit einem umlaufenden Rinnenprofil und querschnittsversteifenden Stegen darin in dem Sinne weiter zu entwickeln, daß größere Querschnittsverformungen und seitliche Belastungen nachgiebig und elastisch aufgenommen werden können, ohne daß es zu einem Bruch kommt.

Gemäß der Erfindung wird diese Aufgabe von einem Kunststoffbehälter nach dem Oberbegriff des Anspruchs 1 ausgehend mit den kennzeichnenden Merkmalen des Anspruchs 1 gelöst. Weitere Ausgestaltungen der Erfindung ergeben sich aus den Unteransprüchen.

Es hat sich gezeigt, daß die rein unter Steifigkeitsgesichtspunkten gebotene Rinnenstruktur des oberen Anschlußbereiches mit ebenen, exakt quer zum Rinnenprofil verlaufenden Versteifungsstegen zu einer formbedingten Starrheit führt. Hiervon abweichende Verläufe der Stege, die auch nur bereichsweise schräg zum Rinnenprofil (und zu der Querrichtung) ausgerichtet sind, vermögen schon eine erhebliche Flexibilität in die Konstruktion hineinzubringen. Dies führt dazu, daß sich die Randform und damit auch der Topfquerschnitt mit seitlicher Belastung erheblich verformen kann, ohne zu brechen.

Die Stege können als planebene Stege etwa insgesamt unter einem leichten Schrägwinkel im Rinnenprofil sitzen. Bei Querschnittsverformung des oberen Abschlußbereiches treten dann auch gewisse seitliche Auslenkungen am Umfangsrand des Rinnenprofils im Zuge der Gesamtverformung auf.

Werden die Stege insgesamt, etwa in planebener Form, schräg gestellt, allerdings mit wechselnder Schrägrichtung, dann erheben sich an den Übergängen zum Umfangsrand bzw. zur Behälterwand lokale Wandverformungen, wenn die Stege belastungsbedingt flacher gedrückt werden. Gleichwohl ist die Bruchgefahr gegenüber den herkömmlich quergestellten Stegen erheblich verringert.

Die Stege können aber auch in sich angewinkelt oder gekrümmt ausgebildet sein. Auch mehrfache Abwinklungen oder Krümmungen wie etwa eine S-Form sind denkbar. In solchen Fällen können die Stege innerhalb des Rinnenprofils an einander diametral gegenüberliegenden Bereichen ansetzen. Bei Querschnittsverformung nehmen die Stege und die zugehörigen Bereiche des Rinnenprofils eine Auslenkung an, bei der die Stege selbst in sich verformt werden, ohne tangentiale Kräfte auf das Rinnenprofil auszuüben.

Zwei Ausführungsbeispiele der Erfindung sind in der Zeichnung dargestellt und werden nachfolgend näher beschrieben.

In der Zeichnung zeigen:
- Fig. 1:: einen vertikalen Längsschnitt durch einen Pflanztopf,
- Fig. 2:: Teil-Unteransicht des oberen Abschlußbereichs des Pflanztopfs nach Fig. 1,
- Fig. 3:: Unteransicht gemäß Fig. 2 bei Druckbelastung auf den Anschlußbereich,
- Fig. 4:: Unteransicht gemäß Fig. 2 und 3 bei Zugbelastung auf den Anschlußbereich,
- Fig. 5:: Schrägansicht von unten auf einen Ampel-Blumentopf
- Fig. 6:: Unteransicht des Blumentopfs nach Fig. 5 bei seitlicher Querschnittsverformung und
- Fig. 7:: vergrößerte Ansicht des Details VII aus Fig. 6.

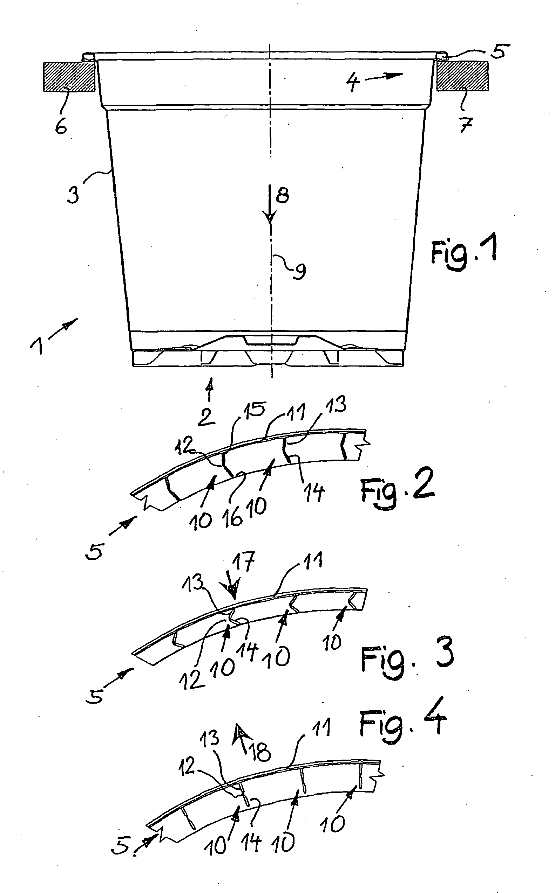

Ein Pflanztopf 1 nach der Schnittdarstellung in Fig. 1 stellt einen Kunststoffbehälter für den Erwerbsgartenbau in im allgemeinen herkömmlicher Bauform mit einem Boden 2, einer Behälterwand 3 und einem oberen Abschlußbereich 4 hierzu in Form eines unterseitig offenen umlaufenden Rinnenprofils 5 dar, mit dem der Pflanztopf 1 hier beispielsweise auf zwei Backen 6, 7 eines zangen- oder gabelartigen Handhabungswerkzeuges aufliegt.

Bei einer solchen Auflagerung eines Pflanztopfs wird dessen in Richtung eines Pfeils 8 auf einer vertikalen Mittelachse 9 wiedergegebene Last vom oberen Abschlußbereich bzw. dem Rinnenbereich 4 bzw. dem Rinnenprofil 5 übernommen und aufgelagert, wobei sich auch dann, wenn die Abstützung auf den Backen 6, 7 nur stellenweise erfolgt und, über den Umfang ungleichmäßig ist, im allgemeinen aber bei ordnungsgemäßer Auslegung des Pflanztopfs 1 eine unkritische Belastung ergibt. Der obere Abschlußbereich 4 ist für planmäßig vorzusehende Belastungen überaus fest und auch steif ausgebildet, wozu Stege 10 an der Innenseite des Rinnenprofils 5 beitragen, die herkömmlich quer zum Rinnenprofil also jeweils in einer bezüglich der Mittelachse 9 radial-axialen Ebene angeordnet sind und das Rinnenprofil aussteifen.

Gerade diese hochgradige Aussteifung stellt sich aber als wesentlicher Nachteil heraus, wenn es um besondere Verformungen des Topfes geht, die bei der Handhabung im allgemeinen nicht vorgesehen sind, gleichwohl aber unvermeidlich auftreten und dann bisher sehr leicht zu Bruchbelastungen führten. Wenn nämlich etwa die Backen 6,7 bei der maschinellen Handhabung zu eng eingestellt sind oder von der Seite her zu weit nach innen zufassen, wenn etwa gelagerte oder gestapelte Ware beim seitlichen Zusammenschieben verformt wird oder wenn Pflanztöpfe oder Blumenampeln bei der Benutzung vorwiegend seitlich zusammengedrückt oder verformt werden, ist die herkömmliche Struktur des oberen Abschlußbereichs zu starr, um solche Verformungen elastisch aufzunehmen.

Die Fig. 2 zeigt nun mit einer Ansicht von unten gegen das Rinnenprofil 5 Stege 10, die zwar in herkömmlicher Weise innerhalb des Rinnenprofils den Bereich zwischen der innenseitigen Behälterwand 3 und einem Umfangsrand 11 verbinden und damit aussteifen, die aber nicht planeben in einer radial-axialen Ausrichtung bezüglich der Mittelachse 9 verlaufen. Die Stege 10 sind vielmehr in einer geknickten Form ausgeführt, bei der etwa in der Mitte ein senkrecht verlaufender Winkelscheitel 12 zwischen zwei stumpfwinklig aufeinanderstoßenden Stegflächen 13,14 verläuft. Die Stegflächen 13,14 stoßen ihrerseits stumpfwinklig längs Fußlinien 15,16 am Außenrand 11 bzw. an der Behälterwand 3 an, wobei die Fußlinien (15,16) durchaus in einer gemeinsamen radial-axialen Ebene bezüglich der Mittelachse 9 liegen. Gleichwohl erleichtert die geknickte Form der Stege 10 deren Ausweichen bei Druckbelastung, ohne daß diese dabei zerbrechen.

Die Fig. 3 veranschaulicht eine in Richtung eines Pfeils 17 von außen aufgezwungene Verformung des Rinnenprofils, die zu dessen Verengung führt, wobei die Stege 10 stärker in Knickrichtung verformt werden. Dies schafft eine signifikante Verformbarkeit des Topfes im Querschnittsbereich des oberen Abschlußbereichs.

Fig. 4 zeigt demgegenüber die Situation bei einer nach außen gerichteten Zugverformung entsprechend einem Pfeil 18 mit einer Verbreiterung des Rinnenprofils 15 bis zu einer Streckung der Flächen 13,14 der Stege in eine gemeinsame Ebene hinein. In dieser Hinsicht kann gleichfalls eine Verformung ohne das Risiko eines Materialbruchs aufgenommen werden.

Die Stegflächen 13,14 der Stege treffen am Winkelscheitel 12 mit einer Wandverschwächung aufeinander, die eine entsprechende Verformungslinie vorgibt. Ganz entsprechende Wandverschwächungen können auch an den Fußlinien 15,16 vorgesehen sein, um die Wirkung eines Folienscharniers anzunähern und Verformungen des Rinnenprofils 5 selbst niedrig zu halten.

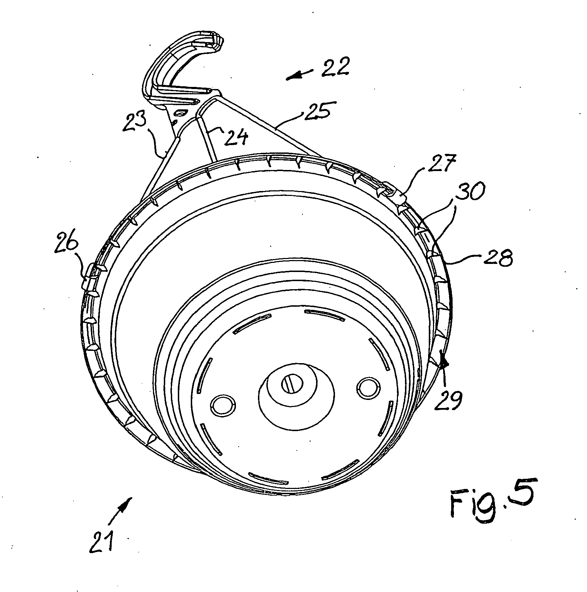

In Fig. 5 ist ein Ampel-Blumentopf 21 zusammen mit einer zugehörigen Aufhängung 22 dargestellt, die mit drei Aufhängungssträngen 23,24,25 am oberen Abschlußbereich des Blumentopfs 21 angreift, wobei hakenförmige Klauen 26,27 einen Umfangsrand 28 an einem nach unten offenen Rinnenprofil 29 zwischen Stegen 30 hintergreifen.

Blumenampeln, die oft auch vom Behältervolumen relativ groß ausgeführt sind und dementsprechend im bepflanzten und bewässerten Zustand auch ein beträchtliches Eigengewicht erhalten können, unterliegen schon von der Aufhängung her einer komplexen Belastung. Eine meist ungeplante seitliche Verformung der Blumenampel kann herkömmlich leicht zum Bruch führen.

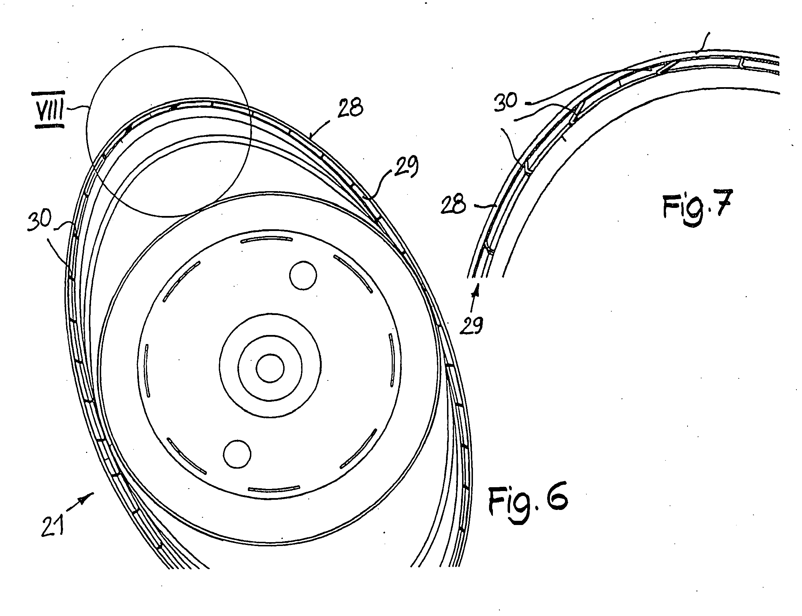

In Fig. 6 ist mit einer Ansicht des Blumentopfs 21 von unten bei einem oval verformten Zustand gezeigt, daß die Querschnittsverformung den gesamten oberen Abschlußbereich betrifft und Querschnittsänderungen im Rinnenprofil 29 nicht nur im Bereich der flach verformten (Andruck-) Bereiche, sondern vor allem auch in den schärfer gekrümmten Endbereichen bewirkt.

Ein solcher Bereich ist in Fig. 7 vergrößert dargestellt, um zu veranschaulichen, daß knickförmige Stege 30 ähnlich den Stegen 10 nach der Ausführungsform gemäß Fig. 1 bis 4 dann die notwendige Anpassung der Querschnittsform des Rinnenprofils 29 erlauben, ohne daß es dabei zum Bruch kommt.

Es versteht sich bei Vorstehendem, daß das geknickte Profil gemäß der Darstellung und der vorangehenden Beschreibung nur eine Möglichkeit ist, eine Verformbarkeit im Querschnitt des Rinnenprofils zu erlauben, die eine größere Elastizität und eine größere Robustheit bei seitlichen Verformungen liefert. Einfach gebogene oder mehrfach geknickte oder gebogene - beispielsweise S-förmige - Stege kommen hier gleicher Weise in Betracht. Von Interesse sind auch planebene Stege ohne eine gewinkelte oder gewölbte Flächenform, die lediglich mehr oder weniger schräg gestellt sind. Eine in einer vorgegebenen Umlaufrichtung im Rinnenprofil gleichsinnige Schrägstellung führt bei seitlicher Verformung zu Ausweichbewegungen des Außenrandes 28 in Umfangsrichtung. Bei wechselnder Schrägstellung wird dagegen die Verformung auf zwischenliegende Umfangsbereiche beschränkt.

## Patentansprüche

1. Kunststoffbehälter (1,21) in Becher- oder Schalenform, insbesondere Pflanztopf, mit einem oberen Abschlußbereich (4) in Form eines unterseitig offenen umlaufenden Rinnenprofils (5) im Anschluß an einen oberen Bereich der Behälterwand (3), die nach außen und weiter zu einem Umfangsrand (11) nach unten geführt ist, wobei das Rinnenprofil mit querschnittsverssteifenden Stegen (10) versehen ist, **dadurch gekennzeichnet, daß** die Stege (10) zumindest bereichsweise schräg zum Rinnenprofil (5) ausgerichtet sind.

2. Kunststoffbehälter nach Anspruch 1, **dadurch gekennzeichnet, daß** die Stege insgesamt schräg zum Rinnenprofil ausgerichtet sind und mit einem stumpfen Winkel am Umfangsrand und an der Behälterwand ansetzen.

3. Kunststoffbehälter nach Anspruch 2, **dadurch gekennzeichnet, daß** die Stege jeweils in einer ebenen Fläche liegen.

4. Kunststoffbehälter nach Anspruch 1, **dadurch gekennzeichnet, daß** die Stege (10) einen abgewinkelten Verlauf zwischen Umfangsrand (11) und Behälterwand (3) aufweisen.

5. Kunststoffbehälter nach Anspruch 4, **dadurch gekennzeichnet, daß** die abgewinkelten Stege (10) einen etwa in der Mitte zwischen Umfangsrand (11) und Behälterwand (3) liegenden Winkelscheitel (12) aufweisen.

6. Kunststoffbehälter nach Anspruch 4 oder 5, **dadurch gekennzeichnet, daß** die abgewinkelten Stege (10) stumpfwinklig an dem Umfangsrand (11) und der Behälterwand (3) längs einander bezüglich des Rinnenprofils diametral gegenüberliegenden Fußlinien (15,16) ansetzen.

7. Kunststoffbehälter nach Anspruch 4, 5 oder 6, **dadurch gekennzeichnet, daß** die Stege (10) schräg aneinanderstoßende Flächenteile (13,14) mit randseitigen Wandverschwächungen aufweisen.

8. Kunststoffbehälter nach Anspruch 4, 5, 6 oder 7, **dadurch gekennzeichnet, daß** die Stege mehrfach zwischen Umfangsrand und Behälterwand abgewinkelt sind.

9. Kunststoffbehältern ach Anspruch 1, **dadurch gekennzeichnet, daß** die Stege eine gewölbte Form aufweisen.

10. Kunststoffbehälter nach einem der Ansprüche 1 bis 9, **dadurch gekennzeichnet, daß** der Abschlußbereich als Tragrand für einen ampelartig an mehreren verteilten Umfangsstellen zu haltenden Ampeltopf (21) ausgebildet ist.

## Claims

1. Plastics container (1, 21) in cup or dish form, and in particular a plant pot, having an upper terminal region (4) in the form of a surrounding profiled channel (5) open on the underside which continues from an upper region of the wall (3) of the container, which wall (3) runs outwards and on, downwards, to a circumferential edge (11), the profiled channel being provided with ribs (10) which stiffen its cross-section, **characterised in that** the ribs (10) are aligned obliquely to the profiled channel (5) at least in a region or regions.

2. Plastics container according to claim 1, **characterised in that** the entire ribs are aligned obliquely to the profiled channel and they join up with the circumferential edge and the wall of the container at an obtuse angle.

3. Plastics container according to claim 2, **characterised in that** the ribs each lie in a plane surface.

4. Plastics container according to claim 3, **characterised in that** the ribs (10) follow an angled path between the circumferential edge (11) and the wall (3) of the container.

5. Plastics container according to claim 4, **characterised in that** the angled ribs (10) have angled apexes (12) which are situated approximately centrally between the circumferential edge (11) and the wall (3) of the container.

6. Plastics container according to claim 4 or 5, **characterised in that** the angled ribs (10) join up with the circumferential edge (11) and the wall (3) of the container at obtuse angles along joint lines (15, 16) which are diametrically opposed to one another across the profiled channel.

7. Plastics container according to claim 4, 5 or 6, **characterised in that** the ribs (10) have parts (13, 14) of their area which meet one another obliquely and which have weakened walls at their edges.

8. Plastics container according to claim 4, 5, 6 or 7, **characterised in that** the ribs are angled more than once between the circumferential edge and the wall of the container.

9. Plastics container according to claim 1, **characterised in that** the ribs are of a curved shape.

10. Plastics container according to one of claims 1 to 9, **characterised in that** the terminal region forms a load-bearing rim of a hanging pot (21) which is to be hung by a plurality of distributed circumferential points.

## Revendications

1. Contenant en plastique (1, 21) sous forme de coupe ou de coque, en particulier de pot de fleurs, comprenant une zone de raccordement supérieure (4) sous forme d'un profilé en forme de gouttière (5) ouvert vers le bas raccordée à une zone supérieure de la paroi de contenant (3), laquelle paroi est guidée vers l'extérieur et un peu plus loin vers le bas en direction d'un bord périphérique (11), le profilé en forme de gouttière étant pourvu de nervures (10) renforçant la section transversale, **caractérisé en ce que** les nervures (10) sont orientées au moins par zones de manière oblique par rapport au profilé en forme de gouttière (5).

2. Contenant en plastique selon la revendication 1, **caractérisé en ce que** les nervures sont orientées dans l'ensemble de manière oblique par rapport au profilé en forme de gouttière et s'appliquent avec un angle obtus contre le bord périphérique et contre la paroi de contenant.

3. Contenant en plastique selon la revendication 2, **caractérisé en ce que** les nervures se situent respectivement dans une surface plane.

4. Contenant en plastique selon la revendication 1, **caractérisé en ce que** les nervures (10) présentent un tracé coudé entre le bord périphérique (11) et la paroi de conteneur (3).

5. Contenant en plastique selon la revendication 4, **caractérisé en ce que** les nervures coudées (10) présentent un sommet de l'angle (12) situé à peu près au centre entre le bord périphérique (11) et la paroi de conteneur (3).

6. Contenant en plastique selon la revendication 4 ou 5, **caractérisé en ce que** les nervures coudées (10) s'appliquent suivant un angle obtus contre le bord périphérique (11) et la paroi de conteneur (3) le long de lignes de pied (15, 16) diamétralement opposés l'un à l'autre par rapport au profilé en forme de gouttière.

7. Contenant en plastique selon la revendication 4, 5 ou 6, **caractérisé en ce que** les nervures (10) présentent des parties de surface (13, 14) contiguës de manière oblique comprenant des affaiblissements de paroi situés du côté du bord.

8. Contenant en plastique selon la revendication 4, 5, 6 ou 7, **caractérisé en ce que** les nervures sont coudées à plusieurs reprises entre le bord périphérique et la paroi de contenant.

9. Contenants en plastique selon la revendication 1, **caractérisés en ce que** les nervures présentent une forme incurvée.

10. Contenant en plastique selon l'une quelconque des revendications 1 à 9, **caractérisé en ce que** la zone de raccordement est conçue comme un bord de support pour un pot à suspension (21) à maintenir à la façon d'une suspension sur plusieurs points périphériques répartis.
